# EUROPEAN PATENT APPLICATION

(11) **EP 4 613 548 A1**
(43) Date of publication of application: **10.09.2025**
(21) Application number: 24890290.0
(22) Date of filing: 04.09.2024
(51) Int. Cl.: B60N 2/28, B60N 2/26

(54) **SEAT-BODY ANGLE ELECTRIC ADJUSTMENT STRUCTURE AND CHILD SAFETY SEAT**

(30) Priority: 17.11.2023 CN 202323110076 U
(71) Applicant: Ningbo Baby First Baby Products Co., Ltd., Ningbo, Zhejiang 315412 (CN)
(72) Inventor: ZHOU, Xiaolin, Ningbo, Zhejiang 315412 (CN)
(74) Representative: Herrmann, Uwe
(86) International application number: PCT/CN2024/116816
(87) International publication number: WO 2025/102930

(57) **Abstract**

The present invention provides an electric seat angle adjustment structure and a child safety seat including the same. The electric seat angle adjustment structure includes a seat body, a base, and a support frame connected to the base. The seat body is provided with a connecting rod. The support frame is provided with an arc-shaped guide rail slidably connected to the connecting rod. The seat body is connected to a connecting shaft. A drive assembly is mounted on the base. The drive assembly includes a drive motor, a threaded lead screw, and a sliding base. The drive motor is connected to the threaded lead screw. The threaded lead screw is movably connected to the sliding base. The connecting shaft is connected to the sliding base. During an operation, the drive motor drives the threaded lead screw to rotate, the threaded lead screw drives the sliding base to move in a front-rear direction, and the sliding base drives the connecting shaft to move, to cause the connecting rod of the seat body to move in the arc-shaped guide rail to adjust a tilt angle of the seat body. Therefore, the tilt angle of the seat body can be flexibly adjusted, the seat body can be moved with less effort, the manufacturing costs are reduced, and the practicability and attractiveness of the child safety seat are increased.

## Description

### TECHNICAL FIELD

The present invention relates to the technical field of safety products for vehicles, and specifically to an electric seat angle adjustment structure and a child safety seat including the same.

### BACKGROUND

With the increasing requirements of consumers and the advert of the era of intelligence and electrification, more and more parents not only pay attention to the safety of child safety seats, but also start to pay special attention to the convenience of operating child safety seats. Child safety seats allowing for the adjustment of the tilt angle of the seat body have appeared on the market. However, the angle adjustment structures of such conventional child safety seats are complicated and require high production costs.

### SUMMARY

To solve at least one of the above problems, the present invention first provides an electric seat angle adjustment structure, including a seat body, a base, and a support frame connected to the base, where the seat body is provided with a connecting rod, and the support frame is provided with an arc-shaped guide rail, the arc-shaped guide rail is slidably connected to the connecting rod, and the seat body is connected to a connecting shaft, a drive assembly is mounted on the base, the drive assembly includes a drive motor, a threaded lead screw, and a sliding base, the drive motor is connected to the threaded lead screw, the threaded lead screw is movably connected to the sliding base, the connecting shaft is connected to the sliding base, and during an operation, the drive motor drives the threaded lead screw to rotate, the threaded lead screw drives the sliding base to move in a front-rear direction, and the sliding base drives the connecting shaft to move, to cause the connecting rod of the seat body to move in the arc-shaped guide rail to adjust a tilt angle of the seat body.

Optionally, the sliding base is provided with a threaded hole and a mounting hole, the threaded hole is configured to engage with the threaded lead screw, the mounting hole is configured to engage with the connecting shaft, and the mounting hole and the threaded hole are perpendicular to each other.

Optionally, the connecting shaft is arranged at a bottom of the seat body, and the sliding base is connected at or adjacent to a middle position on the connecting shaft.

Optionally, the seat body is provided with a fixing hole for mounting the connecting shaft, and the connecting shaft is movably connected to the fixing hole.

Optionally, the drive assembly further includes a motor fixing bracket, and the drive motor is connected to the base through the motor fixing bracket.

Optionally, the support frame is provided with a sliding slot, the connecting shaft is slidably connected to the sliding slot, and the sliding base is configured to drive the connecting shaft to move in the sliding slot, and the sliding slot is a linear slot, and the sliding slot and the threaded lead screw are parallel to each other.

Optionally, two connecting rods are provided, and the two connecting rods are respectively located on a front side and a rear side of the connecting shaft.

Optionally, the drive assembly further includes a lead screw bracket connected to the base, and an end of the threaded lead screw away from the drive motor is rotatably connected to the lead screw bracket.

Optionally, a bearing is provided in the lead screw bracket and configured for mounting the threaded lead screw.

Compared with the prior art, in the electric seat angle adjustment structure according to the present invention, the drive motor is used to drive the threaded lead screw to rotate, and the threaded lead screw causes the sliding base to move in the front-rear direction, so that the connecting shaft on the seat body can move, to cause the connecting rod of the seat body to move in the arc-shaped guide rail on the support frame, thereby precisely adjusting the tilt angle of the seat body. Such a structural design allows parents to flexibly adjust the tilt angle of the seat body for a child as required, providing better riding experience and comfort. The seat body can be moved with less effort. In addition, the angle adjustment structure is simplified, the manufacturing costs are reduced, and the practicability and attractiveness of the child safety seat are increased.

In addition, the present invention provides a child safety seat, including the electric seat angle adjustment structure described above.

Compared with the prior art, the child safety seat of the present invention has the same advantages as those of the electric seat angle adjustment structure compared with the prior art, so no more details will be described herein.

### BRIEF DESCRIPTION OF THE DRAWINGS

FIG. 1 is a structural view of an electric seat angle adjustment structure according to an embodiment of the present invention.
FIG. 2 is an exploded view of a drive assembly according to an embodiment of the present invention.
FIG. 3 is a partial structural view of a seat body and a connecting shaft according to an embodiment of the present invention.
FIG. 4 is a cross-sectional view of an electric seat angle adjustment structure at a minimum reclining angle according to an embodiment of the present invention.
FIG. 5 is an enlarged view of part A in FIG. 4.
FIG. 6 is a cross-sectional view of an electric seat angle adjustment structure in a process of increasing the reclining angle according to an embodiment of the present invention.
FIG. 7 is a cross-sectional view of an electric seat angle adjustment structure at a maximum reclining angle according to an embodiment of the present invention.

### List of reference numerals:

1. seat body; 11. connecting rod; 12. fixing hole; 2. base; 3. support frame; 31. arc-shaped guide rail; 32. sliding slot; 4. connecting shaft; 5. drive assembly; 51. drive motor; 52. threaded lead screw; 53. sliding base; 531. threaded hole; 532. mounting hole; 54. motor fixing bracket; 55. lead screw bracket; 551. bearing.

### DETAILED DESCRIPTION OF THE EMBODIMENTS

To make the objectives, technical features, and advantages of the present invention more comprehensible, specific embodiments of the present invention will be described in detail below with reference to the accompanying drawings.

In the description of the present invention, it should be understood that orientation or position relationships indicated by the terms such as "up" and "down" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature.

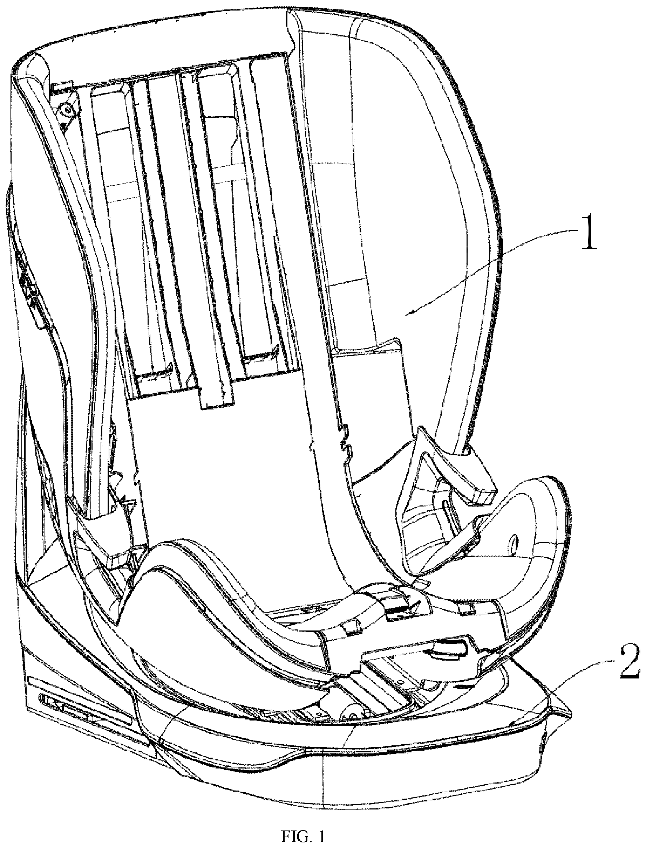

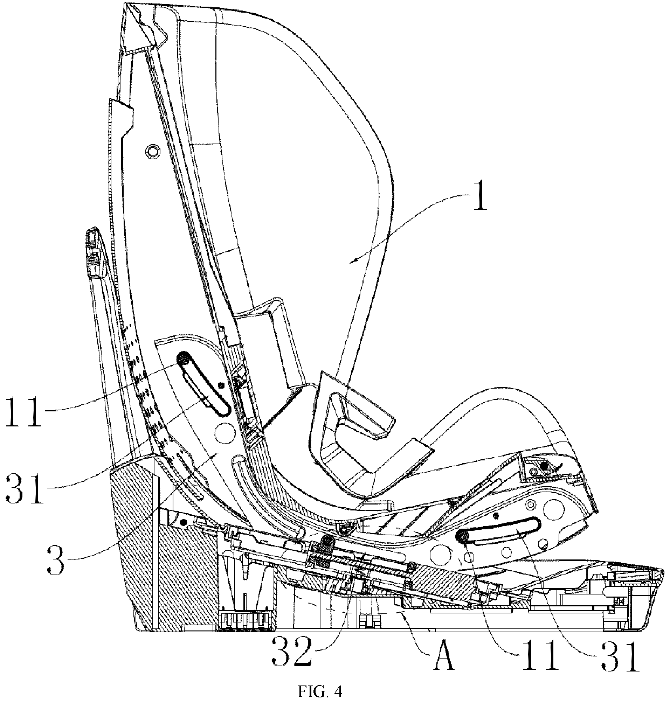

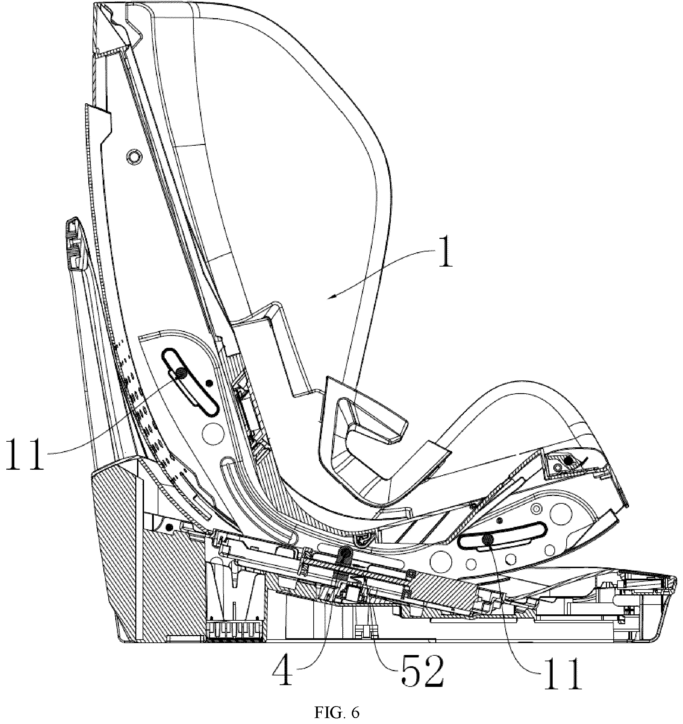

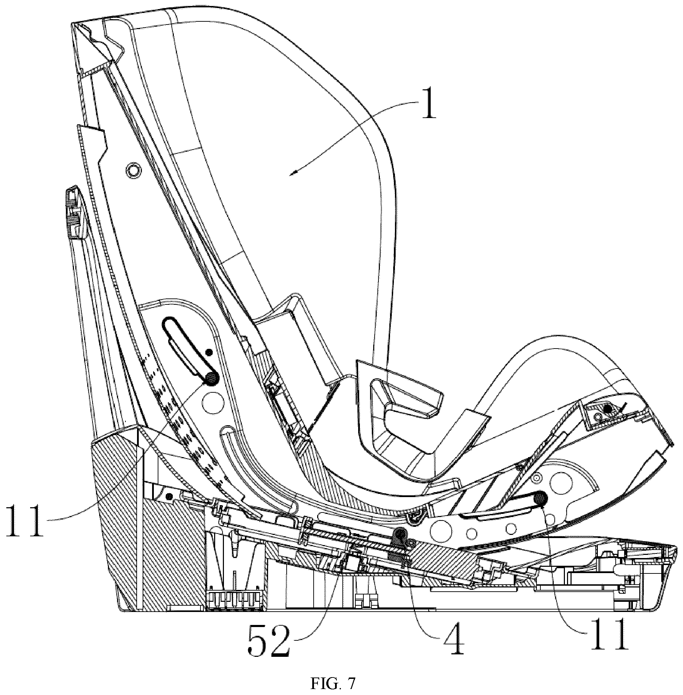

An embodiment of the present invention provides an electric seat angle adjustment structure. Referring to FIG. 1 to FIG. 7, the electric seat angle adjustment structure includes a seat body 1, a base 2, and a support frame 3 connected to the base 2. The seat body 1 is provided with a connecting rod 11. The support frame 3 is provided with an arc-shaped guide rail 31, and the arc-shaped guide rail 31 is slidably connected to the connecting rod 11. The seat body 1 is connected to a connecting shaft 4. A drive assembly 5 is mounted on the base 2. The drive assembly 5 includes a drive motor 51, a threaded lead screw 52, and a sliding base 53. The drive motor 51 is connected to the threaded lead screw 52. The threaded lead screw 52 is movably connected to the sliding base 53. The connecting shaft 4 is connected to the sliding base 53. During an operation, the drive motor 51 drives the threaded lead screw 52 to rotate, the threaded lead screw 52 drives the sliding base 53 to move in a front-rear direction, and the sliding base 53 drives the connecting shaft 4 to move, to cause the connecting rod 11 of the seat body 1 to move in the arc-shaped guide rail 31 to adjust a tilt angle of the seat body 1.

The base 2 is fixedly connected to the support frame 3, and the seat body 1 can rotate in the front-rear direction relative to the support frame 3, to adjust the tilt angle of the seat body 1 relative to the base 2. Two connecting rods 11 are preferably provided, and the two connecting rods 11 are respectively located on a front side and a rear side of the connecting shaft 4, to provide better balance and support to ensure that the seat body 1 is more stable during the adjustment of the tilt angle. The two connecting rods 11 are respectively located on the front side and the rear side of the connecting shaft 4 to ensure uniform movement of the seat body 1, thereby achieving precise adjustment of the seat angle. The curved shape of the arc-shaped guide rail 31 is designed to be related to the tilt angle adjustment of the seat body 1. When the seat body 1 needs to tilt in the front-rear direction, the arc-shaped guide rail 31 provides a controlled path to guide the movement of the seat body 1 on the arc-shaped guide rail 31, thereby ensuring the stable and precise movement of the seat body 1. The sliding base 53 is provided with internal threads configured to engage with external threads of the threaded lead screw 52. A rotation of the threaded lead screw 52 causes the sliding base 53 to translate in the front-rear direction. When the drive motor 51 stops operating, the threaded lead screw 52 synchronously stops rotating, the sliding base 53 stops moving relative to the threaded lead screw 52, and the seat body 1 is stationary relative to the base 2. As such, the adjustment of the tilt angle of the seat body 1 is completed.

According to the electric seat angle adjustment structure in this embodiment, the drive motor 51 is used to drive the threaded lead screw 52 to rotate, and the threaded lead screw 52 causes the sliding base 53 to move in the front-rear direction, so that the connecting shaft 4 on the seat body 1 can move, to cause the connecting rod 11 of the seat body 1 to move in the arc-shaped guide rail 31 on the support frame 3, thereby precisely adjusting the tilt angle of the seat body 1. Such a structural design allows parents to flexibly adjust the tilt angle of the seat body 1 for a child as required, providing better riding experience and comfort. The seat body 1 can be moved with less effort. In addition, the angle adjustment structure is simplified, the manufacturing costs are reduced, and the practicability and attractiveness of the child safety seat are increased.

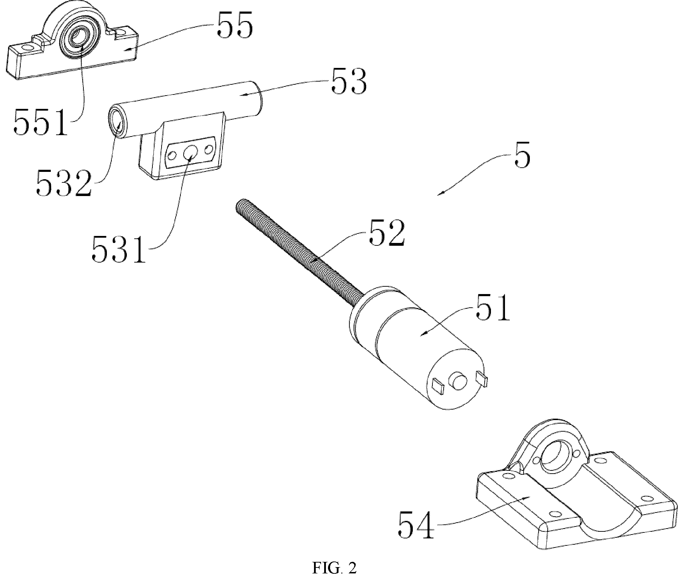

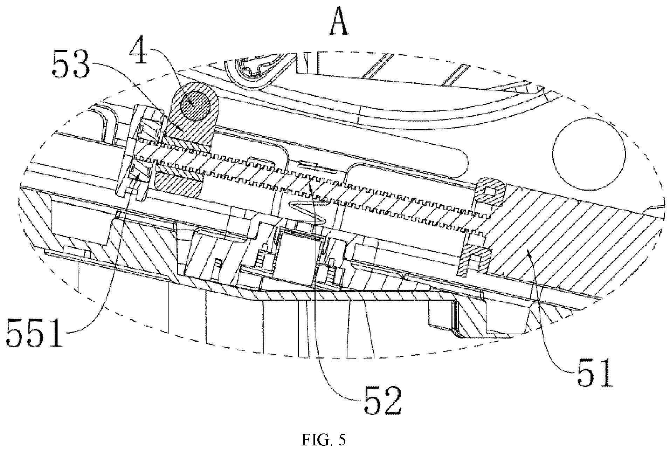

Optionally, as shown in FIG. 2 and FIG. 5, the sliding base 53 is provided with a threaded hole 531 and a mounting hole 532, the threaded hole 531 is configured to engage with the threaded lead screw 52, and the mounting hole 532 is configured to engage with the connecting shaft 4, to realize the rotation of the threaded lead screw 52. The mounting hole 532 and the threaded hole 531 are perpendicular to each other. As such, the connecting shaft 4 can more easily drive the seat body 1 to rotate synchronously. The mounting hole 532 is movably engaged with the connecting shaft 4, so that the connecting shaft 4 can rotate freely in the mounting hole 532, but cannot radially move relative to the mounting hole 532, to ensure that the sliding base 53 can drive the connecting shaft 4 to move in the front-rear direction synchronously to adjust of the tilt angle of the seat body 1.

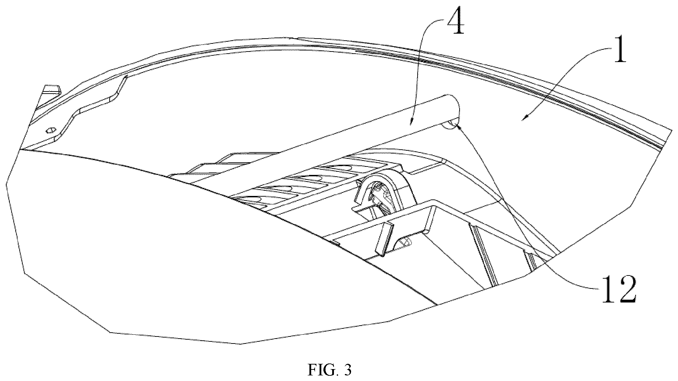

Optionally, as shown in FIG. 3 to FIG. 7, the connecting shaft 4 is arranged at a bottom of the seat body 1, e.g., at a position adjacent to the center of gravity of the seat body 1, and the sliding base 53 is connected at or adjacent to a middle position on the connecting shaft 4, to ensure the stability and balance of the seat body 1, thereby adjusting the tilt angle more effectively. The arrangement of the connecting shaft 4 at the position adjacent to the center of gravity of the seat body 1 can reduce the instability of the seat body 1 and make it more easily controlled by the sliding base 53. Such a structure is easy to assemble and lay out, is more labor-saving, and provides better structural strength and stability.

Optionally, as shown in FIG. 3, the seat body 1 is provided with a fixing hole 12 for mounting the connecting shaft 4, and the connecting shaft 4 is movably connected to the fixing hole 12 in a vertical direction. Such a structure facilitates the rotation of the seat body 1, because there is a height difference in the vertical direction between an initial position of the seat body 1 and a position at a large reclining angle. The fixing hole 12 is provided at or adjacent to the center of gravity at the bottom of the seat body 1, to ensure that the connection between the connecting shaft 4 and the seat body 1 is at the most stable part of the seat. In addition, the connecting shaft 4 may also be movably connected to the fixing hole 12 in a left-right direction, so that the connecting shaft 4 can move in the fixing hole, to change the tilt angle of the seat body.

Optionally, as shown in FIG. 5, the support frame 3 is provided with a sliding slot 32, the connecting shaft 4 is slidably connected to the sliding slot 32, and the sliding base 53 is configured to drive the connecting shaft 4 to move in the sliding slot 32, to provide support for the connecting shaft 4 and define a moving direction of the connecting shaft 4. Preferably, the sliding slot 32 is a linear slot, and the sliding slot 32 and the threaded lead screw 52 are parallel to each other. A movement path defined by the sliding slot 32 is limited in a linear direction parallel to the threaded lead screw 52, and the rotation of the threaded lead screw 52 causes the sliding base 53 to move on a straight line in the front-rear direction. Such a design simplifies the seat adjustment system, and ensures that the movement of the seat body 1 in the front-rear direction is implemented in a direction parallel to the threaded lead screw 52, thereby adjusting the tilt angle.

Optionally, as shown in FIG. 2 and FIG. 5, the drive assembly 5 further includes a motor fixing bracket 54, and the drive motor 51 is connected to the base 2 through the motor fixing bracket 54. Such a design ensures the stable mounting and fixation of the drive motor 51, so that the drive motor 51 can reliably push the threaded lead screw 52 to cause the sliding base 53 to move in the front-rear direction, thereby controlling the movement of the connecting shaft 4 and the seat body 1.

Optionally, as shown in FIG. 2 and FIG. 5, the drive assembly 5 further includes a lead screw bracket 55 connected to the base 2, and an end of the threaded lead screw 52 away from the drive motor 51 is rotatably connected to the lead screw bracket 55, to support the threaded lead screw 52, and ensure a more stable and smooth rotation of the threaded lead screw 52. A bearing 551 is provided in the lead screw bracket 55 and configured for mounting the threaded lead screw 52. The arrangement of the bearing 551 enables the threaded lead screw 52 to rotate more smoothly with less friction and vibration, thereby improving the reliability and efficiency of the drive assembly 5.

When a user needs to adjust the reclining angle of the seat body 1, the drive motor 51 is turned on to drive the threaded lead screw 52 to rotate. The rotation of the threaded lead screw 52 causes the sliding base 53 to translate in the front-rear direction. The translation of the sliding base 53 on the threaded lead screw 52 drives the connecting shaft 4 to move in the sliding slot 32 on the support frame 3 to push the seat body 1, to adjust the tilt angle of the seat body 1. Whether a maximum tilt range of angle adjustment is reached may be controlled and determined through triggering or through calculation using an algorithm. The seat is designed with a zero-gravity large reclining angle state. An in-vehicle monitoring device or an external monitoring device is connected to an in-vehicle infotainment system to monitor the state of the child in the seat. After it is detected that the child falls asleep, the seat is automatically adjusted to the zero-gravity large reclining angle state. In addition, such an adjustment may also be controlled through one-button operation or voice.

Another embodiment of the present invention provides a child safety seat, including the electric seat angle adjustment structure described above.

According to the child safety seat in this embodiment, the drive motor 51 is used to drive the threaded lead screw 52 to rotate, and the threaded lead screw 52 causes the sliding base 53 to move in the front-rear direction, so that the connecting shaft 4 on the seat body 1 can move in the sliding slot 32 on the support frame 3, to cause the connecting rod 11 of the seat body 1 to move in the arc-shaped guide rail 31 on the support frame 3, thereby precisely adjusting the tilt angle of the seat body 1. Such a structural design allows parents to flexibly adjust the tilt angle of the seat body 1 for a child as required, providing better riding experience and comfort. The seat body 1 can be moved with less effort. In addition, the angle adjustment structure is simplified, the manufacturing costs are reduced, and the practicability and attractiveness of the child safety seat are increased.

Although the present invention has been disclosed above, the scope of protection of the present invention is not limited thereto. Those skilled in the art can make various changes and modifications without departing from the spirit and scope of the present invention. Such changes and modifications also fall within the scope of protection of the present invention.

## Claims

1. An electric seat angle adjustment structure, **characterized by** comprising a seat body (1), a base (2), and a support frame (3) connected to the base (2), wherein the seat body (1) is provided with a connecting rod (11), and the support frame (3) is provided with an arc-shaped guide rail (31), the arc-shaped guide rail (31) is slidably connected to the connecting rod (11), and the seat body (1) is connected to a connecting shaft (4), a drive assembly (5) is mounted on the base (2), the drive assembly (5) comprises a drive motor (51), a threaded lead screw (52), and a sliding base (53), the drive motor (51) is connected to the threaded lead screw (52), the threaded lead screw (52) is movably connected to the sliding base (53), the connecting shaft (4) is connected to the sliding base (53), and during an operation, the drive motor (51) drives the threaded lead screw (52) to rotate, the threaded lead screw (52) drives the sliding base (53) to move in a front-rear direction, and the sliding base (53) drives the connecting shaft (4) to move, to cause the connecting rod (11) of the seat body (1) to move in the arc-shaped guide rail (31) to adjust a tilt angle of the seat body (1).

2. The electric seat angle adjustment structure according to claim 1, **characterized in that** the sliding base (53) is provided with a threaded hole (531) and a mounting hole (532), the threaded hole (531) is configured to engage with the threaded lead screw (52), the mounting hole (532) is configured to engage with the connecting shaft (4), and the mounting hole (532) and the threaded hole (531) are perpendicular to each other.

3. The electric seat angle adjustment structure according to claim 1, **characterized in that** the connecting shaft (4) is arranged at a bottom of the seat body (1), and the sliding base (53) is connected at or adjacent to a middle position on the connecting shaft (4).

4. The electric seat angle adjustment structure according to claim 1, **characterized in that** the seat body (1) is provided with a fixing hole (12) for mounting the connecting shaft (4), and the connecting shaft (4) is movably connected to the fixing hole (12).

5. The electric seat angle adjustment structure according to claim 1, **characterized in that** the drive assembly (5) further comprises a motor fixing bracket (54), and the drive motor (51) is connected to the base (2) through the motor fixing bracket (54).

6. The electric seat angle adjustment structure according to claim 1, **characterized in that** the support frame (3) is provided with a sliding slot (32), the connecting shaft (4) is slidably connected to the sliding slot (32), and the sliding base (53) is configured to drive the connecting shaft (4) to move in the sliding slot (32), and the sliding slot (32) is a linear slot, and the sliding slot (32) and the threaded lead screw (52) are parallel to each other.

7. The electric seat angle adjustment structure according to claim 1, **characterized in that** two connecting rods (11) are provided, and the two connecting rods (11) are respectively located on a front side and a rear side of the connecting shaft (4).

8. The electric seat angle adjustment structure according to any one of claims 1 to 7, **characterized in that** the drive assembly (5) further comprises a lead screw bracket (55) connected to the base (2), and an end of the threaded lead screw (52) away from the drive motor (51) is rotatably connected to the lead screw bracket (55).

9. The electric seat angle adjustment structure according to claim 8, **characterized in that** a bearing (551) is provided in the lead screw bracket (55) and configured for mounting the threaded lead screw (52).

10. A child safety seat, **characterized by** comprising the electric seat angle adjustment structure according to any one of claims 1 to 9.
